# FASCICULE DE BREVET EUROPEEN

(11) **EP 2 440 746 B1**
(45) Date de publication et mention de la délivrance du brevet: **25.02.2015**
(21) Numéro de dépôt: 10724821.3
(22) Date de dépôt: 08.06.2010
(51) Int. Cl.: F01D 5/08, F01D 25/12

(54) **TURBOMACHINE COMPRENANT DES MOYENS AMELIORES DE REGLAGE DU DEBIT D'UN FLUX D'AIR DE REFROIDISSEMENT PRELEVE EN SORTIE DE COMPRESSEUR HAUTE PRESSION**
TURBINENMOTOR MIT VERBESSERTER VORRICHTUNG ZUR EINSTELLUNG DER STRÖMUNGSGESCHWINDIGKEIT EINES AM AUSGANG EINES HOCHDRUCKVERDICHTERS ABGEZAPFTEN KÜHLLUFTSTROMS
TURBINE ENGINE INCLUDING AN IMPROVED MEANS FOR ADJUSTING THE FLOW RATE OF A COOLING AIR FLOW EXTRACTED AT THE OUTPUT OF A HIGH-PRESSURE COMPRESSOR

(30) Priorité: 10.06.2009 FR 0953829
(43) Date de publication de la demande: 18.04.2012
(73) Titulaire: Snecma, 75015 Paris (FR)
(72) Inventeur: GARIN, Fabrice, Marcel, Noël, F-77350 Boissise La Bertrand (FR); JUDET, Maurice, Guy, F-77190 Dammarie Les Lys (FR); PASQUIS, Patrick, Claude, F-77950 Moisenay (FR); SCHWEBLEN, Wilfried, Lionel, F-77370 Chateaubleau (FR)
(74) Mandataire: Ilgart, Jean-Christophe
(86) Numéro de dépôt international: PCT/EP2010/058014
(87) Numéro de publication internationale: WO 2010/142682

(56) Documents cités:
- EP-A1- 0 188 910
- EP-A1- 1 445 421
- EP-A2- 1 260 673
- EP-A2- 2 055 895

## Description

### DOMAINE TECHNIQUE

La présente invention se rapporte au domaine des turbomachines à double corps, et concerne en particulier la ventilation et le refroidissement de composants du compresseur haute pression et de la turbine haute pression de ces turbomachines.

L'invention concerne plus spécifiquement le réglage du débit d'un flux d'air de refroidissement prélevé en sortie de compresseur haute pression dans les turbomachines.

### ÉTAT DE LA TECHNIQUE ANTÉRIEURE

Les turbomachines à double corps comprennent une turbine haute pression agencée en sortie d'une chambre de combustion pour extraire de l'énergie d'un flux primaire de gaz éjectés par cette chambre de combustion et entraîner un compresseur haute pression disposé en amont de la chambre de combustion et alimentant cette chambre en air sous pression. Ces turbomachines comprennent également une turbine basse pression agencée en aval de la turbine haute pression pour extraire un surcroît d'énergie du flux primaire de gaz et entraîner en rotation un compresseur basse pression agencé en amont du compresseur haute pression.

Le compresseur haute pression de ces turbomachines peut comporter un étage aval centrifuge comprenant un rouet.

Leur turbine haute pression comprend en général un distributeur formé d'une pluralité d'aubes statiques disposées en sortie de la chambre de combustion, et un disque aubagé monté en aval du distributeur et entraîné en rotation par le flux des gaz éjectés par la chambre de combustion.

Le disque aubagé de la turbine haute pression et le rouet du compresseur haute pression sont reliés entre eux et font partie d'un rotor haute pression de la turbomachine, de sorte que le disque de la turbine puisse entraîner en rotation le rouet du compresseur, d'une manière bien connue.

La face aval du rouet du compresseur haute pression est en général refroidie par un flux d'air prélevé en sortie de ce compresseur, et dont le débit est réglé par le jeu entre la partie tournante et la partie statique d'un joint à labyrinthe, qui sépare une première cavité annulaire délimitée notamment par la face aval du rouet, d'une deuxième cavité annulaire dans laquelle circule un flux d'air de refroidissement des aubes du disque de la turbine haute pression ainsi qu'un flux d'air destiné à alimenter une cavité de purge pour limiter les risques de fuite au niveau du flux primaire entre le distributeur et le disque aubagé de la turbine haute pression.

Toutefois, dans certaines de ces turbomachines, le débit du flux d'air de refroidissement du rouet peut être plus élevé que ce qui est nécessaire pour assurer ce refroidissement.

Cela peut notamment résulter d'un jeu trop grand entre la partie tournante et la partie statique du joint à labyrinthe précité, ce qui peut notamment se produire lors d'un changement du régime de fonctionnement de la turbomachine.

Une partie du flux délivré par le compresseur haute pression est alors prélevée inutilement sur le flux primaire, ce qui réduit considérablement les performances de ces turbomachines.

De plus, le flux d'air de refroidissement du rouet est plus chaud, lorsqu'il arrive dans la deuxième cavité annulaire, que le flux d'air de refroidissement des aubes du disque de la turbine haute pression. Le mélange des deux flux précités induit donc une élévation néfaste de la température du flux d'air de refroidissement des aubes, et cela d'autant plus que le débit du flux d'air de refroidissement du rouet est élevé.

Une turbomachine selon l'art antérieur est connu par le document EP 0188 910.

### EXPOSE DE L'INVENTION

L'invention a notamment pour but d'apporter une solution simple, économique et efficace à ces problèmes.

Elle a en particulier pour but de réduire à une valeur nominale le débit du flux d'air de refroidissement du flanc aval du rouet du compresseur haute pression dans une turbomachine.

L'invention propose à cet effet une turbomachine à double corps, comprenant :
- un rotor haute pression comprenant un rouet d'un compresseur haute pression de la turbomachine et un disque aubagé d'une turbine haute pression de la turbomachine,
- une chambre de combustion montée axialement entre le compresseur haute pression et la turbine haute pression,
- deux parois coaxiales délimitant entre elles un canal annulaire d'injection d'air, qui est raccordé à un espace annulaire de contournement de la chambre de combustion, et qui est destiné à accélérer un flux d'air de refroidissement des aubes du disque aubagé de la turbine haute pression provenant dudit espace de contournement de la chambre de combustion,
- un premier joint à labyrinthe comprenant une partie statique reliée fixement à une première desdites parois délimitant le canal d'injection, et une partie tournante portée par un disque du rotor haute pression et comprenant au moins deux nervures annulaires en saillie vers ladite partie statique,
- un deuxième joint à labyrinthe comprenant une partie statique reliée fixement à une seconde desdites parois délimitant le canal d'injection, et une partie tournante reliée fixement à la partie tournante du premier joint à labyrinthe,
- un flasque annulaire monté en regard du flanc amont du disque aubagé de la turbine haute pression et délimitant avec ce flanc amont une partie amont d'un circuit de refroidissement des aubes de ce disque aubagé,
- une première cavité annulaire délimitée par le flanc aval du rouet, par un carter interne de la chambre de combustion, par ladite première paroi délimitant le canal d'injection, par le premier joint à labyrinthe, et par une paroi annulaire s'étendant axialement de manière à relier le rouet audit disque portant la partie tournante du premier joint à labyrinthe,
- une deuxième cavité annulaire dans laquelle débouche le canal d'injection et qui est délimitée par le premier joint à labyrinthe, par le deuxième joint à labyrinthe, et par une paroi annulaire reliant les parties tournantes de ces joints à labyrinthe et dans laquelle sont ménagés des orifices de mise en communication de ladite deuxième cavité avec ledit circuit de refroidissement des aubes du disque aubagé de la turbine haute pression,
- une troisième cavité annulaire qui communique avec une veine d'écoulement d'un flux primaire de la turbomachine, et qui est délimitée au moins par le deuxième joint à labyrinthe et par le flasque annulaire,
ladite turbomachine étant caractérisée en ce qu'elle comprend une pluralité de canaux ménagés dans ladite partie statique du premier joint à labyrinthe et débouchant dans une cavité annulaire délimitée par deux des nervures de la partie tournante du premier joint à labyrinthe, de manière à y injecter de l'air provenant du canal d'injection.

L'injection d'air entre la partie tournante et la partie statique du premier joint à labyrinthe, dans la cavité annulaire délimitée par les deux nervures précitées, permet de réduire, ou même éventuellement d'annuler, le débit d'air circulant éventuellement entre les première et deuxième cavités annulaires et passant entre la partie tournante et la partie statique de ce premier joint.

Dans le cas particulier où un flux d'air de refroidissement du flanc aval du rouet du compresseur haute pression, qui est par exemple prélevé en sortie de ce compresseur, circule dans la première cavité selon un sens globalement orienté de l'amont vers l'aval, et sort de cette cavité par le premier joint à labyrinthe, l'invention permet ainsi de réduire le débit de ce flux d'air de refroidissement du rouet, et donc la quantité d'air prélevé en sortie du compresseur haute pression.

Cela permet notamment d'améliorer les performances de la turbomachine, et d'abaisser la température du flux d'air circulant dans le circuit de refroidissement des aubes et résultant du mélange, dans la deuxième cavité, du flux d'air de refroidissement des aubes qui est relativement froid et qui provient du canal d'injection, et du flux d'air de refroidissement du rouet qui est relativement chaud et qui provient de la première cavité.

D'une manière connue en soi, le canal annulaire d'injection comprend de préférence des ailettes inclinées de manière à permettre une réduction de la vitesse tangentielle relative du flux d'air de refroidissement des aubes par rapport au rotor haute pression.

Chacun des canaux précités est avantageusement raccordé à une partie interne du canal d'injection qui est située, relativement à l'écoulement du flux d'air de refroidissement des aubes, en amont des extrémités aval respectives desdites ailettes.

De cette manière, la pression de l'air admis dans les canaux est plus élevée que la pression de l'air en sortie du canal d'injection.

La pression de l'air en sortie des canaux peut ainsi être sensiblement égale, ou éventuellement supérieure, à celle de l'éventuel flux d'air de refroidissement du rouet précité au voisinage de l'extrémité amont du premier joint à labyrinthe. En général, cette pression est en effet supérieure à la pression de l'air de refroidissement des aubes en sortie du canal d'injection.

D'une manière générale, la pression de l'air en sortie des canaux dépend essentiellement du positionnement du raccordement entre ces canaux et le canal d'injection, plus ou moins en amont ou en aval relativement à l'écoulement du flux d'air de refroidissement des aubes dans ce canal d'injection.

D'une manière connue en soi, chacune des parois de révolution coaxiales délimitant le canal annulaire d'injection comprend, relativement à l'écoulement dudit flux d'air de refroidissement des aubes, une partie amont sensiblement tronconique et une partie aval sensiblement radiale.

Cela permet notamment de réduire l'encombrement axial de la turbomachine.

Dans un mode de réalisation de l'invention, la turbomachine comprend en outre des moyens de mise en communication de la première cavité annulaire avec une quatrième cavité annulaire de la turbomachine dans laquelle s'étend le moyeu du disque aubagé de la turbine haute pression.

Cela permet d'établir une circulation d'air entre les première et quatrième cavités annulaires, et ainsi de réduire encore, ou même d'annuler totalement, la circulation d'air entre les première et deuxième cavités au travers du premier joint à labyrinthe.

Dans la quatrième cavité annulaire, l'air provenant de la première cavité peut circuler vers l'aval en assurant une ventilation du moyeu du disque de la turbine haute pression qui s'étend dans cette quatrième cavité.

Cet air se mélange alors éventuellement à un flux d'air prélevé dans un étage amont du compresseur haute pression et destiné à la ventilation du moyeu de ce disque.

Dans le cas où le flux d'air circulant de la première vers la quatrième cavité provient d'un flux de refroidissement du rouet du compresseur haute pression tel que décrit ci-dessus, ce flux d'air présente l'avantage que sa température varie plus rapidement lors de variations du régime de fonctionnement de la turbomachine que celle de l'éventuel flux d'air prélevé en amont dans le compresseur haute pression. Pour cette raison notamment, la ventilation du moyeu du disque précité par le flux d'air qui provient de la deuxième cavité annulaire et qui est éventuellement mélangé avec le flux d'air prélevé en amont dans le compresseur haute pression, permet de réduire le niveau des dilatations différentielles entre le rotor et le stator de la turbine haute pression.

Les moyens de mise en communication précités comprennent de préférence des canaux formés entre une face amont du disque du rotor haute pression qui porte la partie tournante du premier joint à labyrinthe, et une face aval d'une bride annulaire agencée à l'extrémité aval de ladite paroi reliant le rouet du compresseur haute pression au disque précité.

Ces canaux peuvent par exemple être formés de rainures pratiquées dans la face aval de ladite bride ou dans la face amont du disque précité.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue partielle en coupe axiale d'une turbomachine selon un premier mode de réalisation de l'invention ;
- la figure 2 est une vue à plus grande échelle d'une partie de la turbomachine de la figure 1 ;
- la figure 3 est une vue partielle en perspective d'une partie de la turbomachine de la figure 1, comportant un plan de coupe axial ;
- la figure 4 est une vue semblable à la figure 2, d'une turbomachine selon un deuxième mode de réalisation de l'invention.

### EXPOSÉ DÉTAILLÉ DE MODES DE RÉALISATION PREFERES

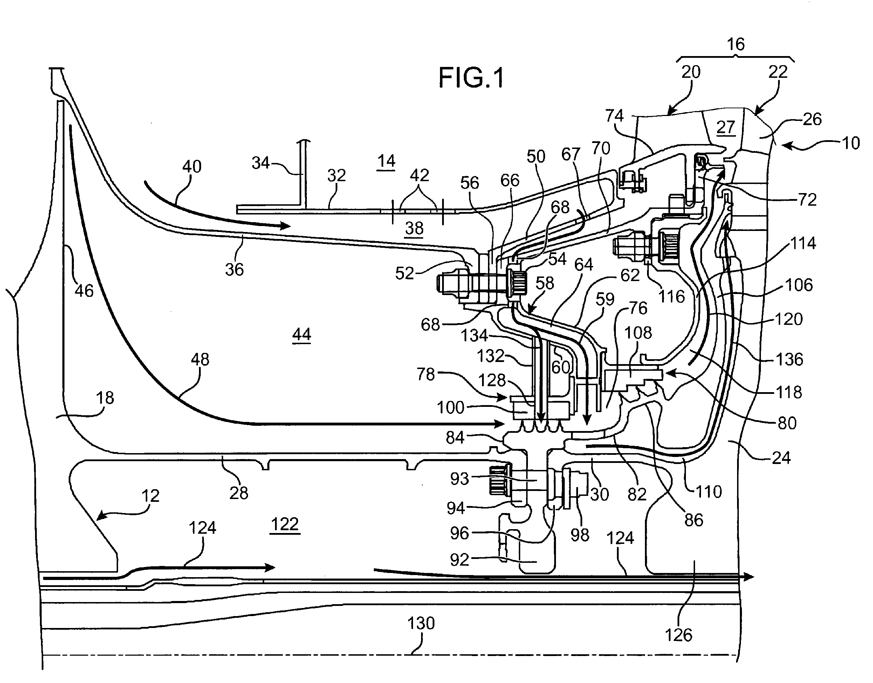

Les figures 1 à 3 représentent une partie d'une turbomachine 10, telle notamment qu'un turboréacteur ou un turbopropulseur d'avion, selon un premier mode de réalisation de l'invention.

Comme le montre la figure 1, la turbomachine 10 comprend d'amont en aval, dans le sens de l'écoulement des gaz à l'intérieur de la turbomachine, un compresseur haute pression 12, une chambre annulaire de combustion 14, et une turbine haute pression 16, qui sont visibles en partie sur la figure 1.

Le compresseur haute pression comprend à son extrémité aval un rouet centrifuge 18 destiné à alimenter en gaz sous pression la chambre de combustion 14. Ce compresseur peut en outre comprendre d'autres organes tournants tels que des disques aubagés (non visibles sur la figure 1) agencés en amont du rouet 18.

La turbine haute pression comprend un étage de distributeur 20 en amont et un étage de rotor 22 en aval. Ce dernier comprend un disque 24 monté rotatif et portant des aubes 26 qui s'étendent dans la veine 27 d'écoulement des gaz de combustion éjectés par la chambre de combustion 14, qui est couramment appelée veine primaire. Les aubes 26 sont destinées à extraire de l'énergie mécanique du flux de gaz précité pour entraîner en rotation le rouet 18 et les éventuels autres organes tournants du compresseur haute pression 12. Pour cela, le rouet 18 de ce compresseur et le disque aubagé 24 de la turbine sont reliés l'un à l'autre par des viroles annulaires 28 et 30 qui se projettent axialement respectivement depuis le rouet 18 et depuis le disque 24, de manière à former un ensemble solidaire en rotation couramment appelé rotor haute pression de la turbomachine 10.

La chambre de combustion 14 est délimitée par une paroi interne 32 sensiblement annulaire, par une paroi externe sensiblement annulaire (non visible sur la figure 1), et par un fond de chambre 34 (partiellement représenté sur cette figure).

Un carter interne de la chambre de combustion 14 formé d'une virole annulaire incurvée 36, qui est par exemple raccordée à un ensemble diffuseur-redresseur annulaire (non visible sur la figure 1) monté en sortie du compresseur haute pression 12, s'étend radialement vers l'intérieur par rapport à la paroi interne 32 de la chambre de combustion 14 et délimite avec cette-ci un espace annulaire 38 de contournement de cette chambre. Cet espace annulaire 38 est destiné à la circulation d'un flux d'air 40 provenant de la sortie du compresseur haute pression 12, et prévu d'une part pour alimenter l'intérieur de la chambre de combustion en passant par des orifices 42 ménagés dans la paroi interne 32 de celle-ci, et d'autre part pour alimenter un circuit de refroidissement de l'étage de rotor 22 de la turbine haute pression 16, comme cela apparaîtra plus clairement dans ce qui suit.

La virole incurvée 36 assure une séparation entre l'espace de contournement 38 précité et une première cavité annulaire 44 délimitée par le flanc aval 46 et par la virole 28 du rouet 18. Cette première cavité 44 est destinée à recevoir en fonctionnement un flux d'air 48 de refroidissement du flanc aval 46 de ce rouet 18, prélevé en sortie du compresseur haute pression 12.

La paroi interne 32 de la chambre de combustion 14 est reliée à la virole incurvée 36 par l'intermédiaire d'une virole tronconique 50. Pour cela, la virole incurvée 36 comporte à son extrémité aval une bride annulaire 52 qui est fixée, par des moyens 54 du type vis-écrou ou analogues, à une bride annulaire 56 formée à l'extrémité amont de la virole tronconique 50, ainsi qu'à des moyens 58 d'injection d'un flux d'air 59 dans le circuit de refroidissement précité de l'étage de rotor 22 de la turbine haute pression 16, lesquels moyens 58 communiquent avec l'espace 38 de contournement de la chambre de combustion.

Les moyens d'injection 58 comprennent deux parois annulaires coaxiales, respectivement interne 60 et externe 62, délimitant un canal annulaire d'injection 64. Chacune de ces parois 60 et 62 comporte une partie amont tronconique dont la section diminue de l'amont vers l'aval, et une partie aval qui s'étend radialement. Le canal d'injection 64 présente ainsi une partie amont tronconique et une partie aval s'étendant sensiblement radialement, qui sont séparées par un coude.

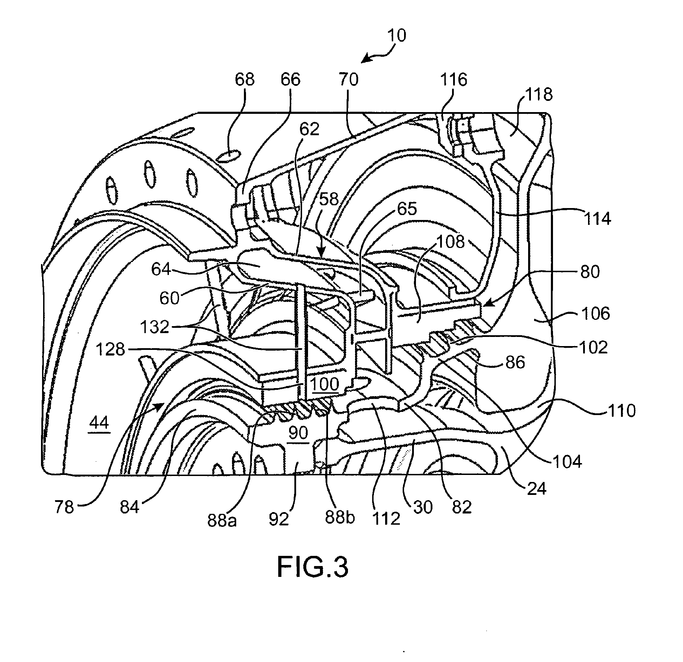

Dans sa partie aval, le canal d'injection 64 comprend des ailettes 65 (figure 3) qui s'étendent axialement depuis la paroi interne 60 jusqu'à la paroi externe 62 délimitant le canal d'injection 64, et qui sont inclinées tangentiellement, de l'extérieur vers l'intérieur radialement, dans le sens de rotation du rotor haute pression. Ces ailettes 65 sont destinées, en fonctionnement, à réduire la vitesse relative du flux d'air sortant du canal 64 par rapport aux éléments du rotor, comme cela apparaîtra plus clairement dans ce qui suit.

Dans le mode de réalisation représenté sur les figures 1 à 3, les parois 60 et 62 se rejoignent au niveau de leur extrémité amont pour former une bride radiale 66 qui est fixée sur la bride 52 de la virole incurvée 36 et sur la bride 56 de la virole tronconique 50 par les moyens de fixation 54.

La partie amont du canal d'injection 64 communique avec l'espace 38 de contournement de la chambre de combustion 14, par exemple par des orifices 67 formés dans la paroi tronconique 50 et par des passages radiaux 68 ménagés dans la bride 66 (figure 1), circonférentiellement entre les moyens de fixation 54.

La bride 66 des moyens d'injection 58 se prolonge radialement vers l'extérieur et vers l'aval par une paroi tronconique 70 comportant à son extrémité aval une bride 72 de fixation sur une structure annulaire interne 74 de l'étage de distributeur 20.

La partie aval du canal d'injection 64 débouche dans une deuxième cavité annulaire 76, qui est délimitée en amont par un premier joint à labyrinthe 78, en aval par un deuxième joint à labyrinthe 80, et radialement vers l'intérieur par une paroi annulaire 82 reliant entre elles des parties tournantes respectives 84 et 86 des joints à labyrinthe 78 et 80.

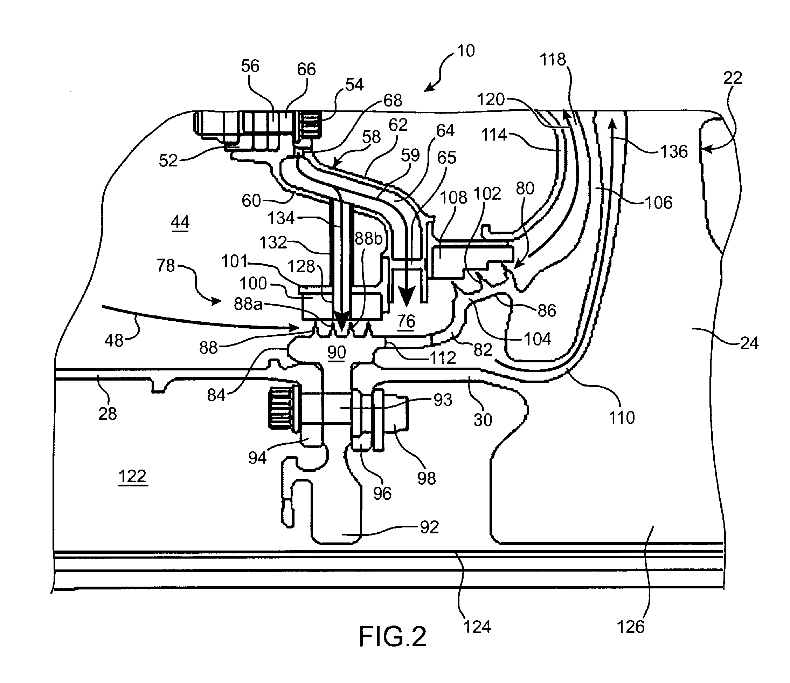

D'une manière connue en soi, la partie tournante 84 du premier joint à labyrinthe 78 comprend des nervures circonférentielles 88 (figure 2), couramment appelées « léchettes » et par exemple au nombre de quatre, qui font saillie radialement vers l'extérieur depuis une paroi cylindrique de section circulaire 90 portée par un disque 92 du rotor haute pression.

Ce disque 92 comporte une partie médiane 93 qui est interposée entre une bride radiale 94 formée à l'extrémité aval de la virole 28 du rouet 18 et une bride radiale 96 formée à l'extrémité amont de la virole 30 du disque 24, ces brides 94 et 96 étant fixées au disque 92 par des moyens 98 du type vis-écrou ou analogues.

Le sommet circonférentiel de chacune des nervures 88 s'étend en regard d'une pièce d'usure cylindrique 100 de section transversale circulaire et de section axiale rectangulaire, qui est réalisée en un matériau abradable, c'est-à-dire conçu pour être usé par frottement contre le sommet des nervures 88 avant l'entrée en service de la turbomachine.

La pièce d'usure cylindrique 100 est fixée sur une paroi annulaire 101, qui est rapportée sur l'extrémité radialement interne de la paroi interne 60 des moyens d'injection 58, et avec laquelle cette pièce d'usure 100 forme la partie statique du premier joint à labyrinthe 78.

D'une manière analogue, la partie tournante 86 du deuxième joint à labyrinthe 80 comprend des nervures ou léchettes circonférentielles 102 (figure 2), par exemple au nombre de trois, qui font saillie radialement vers l'extérieur depuis une paroi tronconique 104 reliée en amont à la partie tournante 84 du premier joint à labyrinthe 78 par l'intermédiaire de la paroi annulaire 82, et reliée en aval à un flasque annulaire 106 (figure 1) qui s'étend sensiblement radialement, en regard du flanc amont du disque 24 de la turbine haute pression 16. Le sommet circonférentiel de chacune des nervures 102 s'étend en regard d'une surface en escalier d'une pièce d'usure annulaire 108 (figure 2) réalisée en un matériau abradable. Cette pièce d'usure 108 est fixée à l'extrémité radialement interne de la paroi externe 62 des moyens d'injection 58.

Dans le mode de réalisation représenté sur les figures 1 à 3, le disque 92 portant la partie tournante 84 du premier joint à labyrinthe 78, la paroi annulaire 82 reliant les parties tournantes respectives 84 et 86 des joints à labyrinthes 78 et 80, la partie tournante 86 du deuxième joint à labyrinthe, et le flasque 106 sont réalisés d'un seul tenant.

Le circuit de refroidissement du disque 24 de la turbine haute pression 16 comprend un canal annulaire 110 ménagé entre le flanc amont du disque 24 et le flasque 106.

Ce canal 110 communique d'une part avec la deuxième cavité 76 précitée, et donc avec le canal d'injection 64, par l'intermédiaire d'une rangée annulaire d'orifices 112 (figures 2 et 3) ménagés dans la paroi 82 qui relie les parties tournantes 84 et 86 des joints à labyrinthe 78 et 80. Le canal 110 communique d'autre part avec des canaux internes (non visibles sur les figures) de refroidissement des aubes 26 portées par le disque 24, le canal 110 formant ainsi une partie amont d'un circuit de refroidissement de ces aubes 26.

Une paroi 114 (figure 1) s'étend en regard et en amont du flasque 106 et relie fixement la pièce d'usure 108 du deuxième joint à labyrinthe 80 à une bride aval 116 de la paroi tronconique 70, de sorte que la paroi 114 permet de délimiter avec le flasque 106 et avec le deuxième joint à labyrinthe 80 une troisième cavité 118 communiquant avec la veine primaire 27 et parfois appelée cavité de purge. Cette troisième cavité 118 est destinée au passage d'un flux d'air 120 de faible débit jusque dans la veine primaire 27 pour limiter le risque qu'une partie des gaz s'écoulant dans la veine primaire 27 ne s'introduise dans la troisième cavité 118 en passant entre l'étage de distributeur 20 et l'étage de rotor 22 de la turbine haute pression 16.

Par ailleurs, les viroles annulaires 28 et 30 délimitent extérieurement une quatrième cavité annulaire 122 destinée à la circulation d'un flux d'air 124, qui est par exemple prélevé au niveau d'un étage amont du compresseur haute pression 12, et qui est destiné à la ventilation du moyeu 126 du disque 24 de la turbine haute pression.

Selon l'invention, une pluralité de canaux radiaux traversant 128 répartis circonférentiellement autour de l'axe 130 de la turbomachine sont ménagés dans la pièce d'usure 100 du premier joint à labyrinthe 78 et dans la paroi annulaire 101 qui porte cette pièce d'usure 100. Ces canaux 128 débouchent à leur extrémité radialement interne entre deux nervures 88a et 88b du premier joint à labyrinthe 78, et sont prolongés à leur extrémité radialement externe par des conduits radiaux 132 correspondants qui relient la paroi annulaire 101 à la paroi interne 60 des moyens d'injection 58 et qui débouchent dans la partie tronconique du canal d'injection 64.

Comme cela apparaîtra plus clairement dans ce qui suit, les canaux 128 sont destinés à réduire le débit du flux d'air circulant entre la première cavité annulaire 44 et la deuxième cavité annulaire 76 au travers du premier joint à labyrinthe 78.

En fonctionnement, le flux d'air 40 provenant du compresseur haute pression 12 et circulant dans le passage annulaire 38 se divise en une partie alimentant les orifices 42 de la paroi interne de la chambre de combustion 14, et une partie qui forme le flux d'air 59 qui alimente le canal d'injection 64 et qui circule jusque dans la deuxième cavité 76 en étant accéléré par les ailettes 65. Du fait de cette accélération, l'air arrive dans la deuxième cavité 76 sous une pression statique considérablement réduite. Dans le mode de réalisation représenté sur les figures 1 à 3, la pression statique de l'air dans la deuxième cavité 76 est par exemple égale à la moitié environ de la pression statique P₀ en sortie du compresseur haute pression 12. La pression statique du flux d'air 59 est ainsi presque divisée par deux entre l'entrée et la sortie du canal d'injection 64.

Le flux d'air 48 prélevé en sortie du rouet 18 du compresseur haute pression 12 circule radialement vers l'intérieur le long du flanc aval 46 de ce rouet 18 en le refroidissant. Puis ce flux 48 circule vers l'aval et passe entre la partie tournante 84 et la pièce d'usure 100 du premier joint à labyrinthe 78. Ce premier joint 78 règle donc le débit du flux d'air 48. Dans le mode de réalisation représenté sur les figures 1 à 3, le flux d'air 48 parvient au niveau de l'entrée amont du premier joint à labyrinthe 78 sous une pression statique égale à 0,6P₀ environ, du fait des pertes de charge subies par ce flux 48 dans la première cavité 44.

Une petite fraction 134 du flux d'air 59 circulant dans le canal d'injection 64 pénètre dans les canaux radiaux 128 et débouche entre les deux nervures 88a et 88b du premier joint à labyrinthe 78.

La position du raccordement des conduits 132 au canal d'injection 64 est choisie de sorte que le flux d'air 134 en sortie des canaux 128 débouche entre les nervures 88a et 88b sous une pression statique sensiblement égale ou légèrement supérieure à celle du flux d'air 48 au niveau de l'entrée du premier joint à labyrinthe 78. Cela permet de réduire dans le premier joint à labyrinthe 78 le débit du flux d'air 48 à une valeur souhaitée, égale par exemple à 0,3% du débit du flux d'air délivré par le compresseur haute pression 12.

Les deux nervures 88a et 88b délimitent ainsi entre la partie tournante 84 et la partie statique 100 du premier joint à labyrinthe 78 une cavité annulaire dans laquelle la pression de l'air peut être déterminée par la position du raccordement des conduits 132 au canal d'injection 64.

Dans la deuxième cavité 76, le flux d'air 48 se mélange avec le flux d'air 59 provenant du canal d'injection 64.

La majeure partie du flux résultant pénètre dans le canal annulaire 110 par les orifices 112 de la paroi annulaire 82, et circule radialement vers l'extérieur le long du flanc amont du disque 24 de la turbine haute pression, comme symbolisé par la flèche 136, pour alimenter le circuit de refroidissement interne des aubes 26 portées par le disque 24.

Une petite partie du flux d'air résultant du mélange des flux 48 et 59 dans la deuxième cavité 76 passe au travers du deuxième joint à labyrinthe 80 et pénètre ainsi dans la troisième cavité 118 pour former le flux 120, permettant de limiter les risques de fuite au niveau de la veine primaire 27, comme expliqué ci-dessus.

D'une manière générale, les canaux 128 selon l'invention permettent de réduire le débit du flux d'air 48 de refroidissement du flanc aval du rouet 18 du compresseur haute pression 12. Ces canaux 128 permettent typiquement de diviser le débit du flux 48 d'un facteur compris entre deux et trois environ. Cela permet d'éviter que le débit de ce flux 48 ne soit supérieur à la valeur qui est nécessaire au refroidissement du rouet 18, ce qui pénaliserait les performances de la turbomachine 10, comme cela a été expliqué ci-dessus.

De plus, le flux d'air 48 est réchauffé lors de son passage le long du flanc aval du rouet 18, de sorte que lorsqu'il entre dans la deuxième cavité annulaire 78, ce flux 48 est considérablement plus chaud que le flux d'air 59 provenant du canal d'injection 64. La réduction du débit du flux d'air 48 permet donc de réduire la température de l'air alimentant la deuxième cavité 78 et d'améliorer ainsi le refroidissement des aubes 26 portées par le disque 24 de la turbine haute pression 16.

Dans le mode de réalisation représenté sur les figures 1 à 3, le raccordement des conduits 132 au canal d'injection 64 est localisé dans la partie tronconique amont de ce canal d'injection pour obtenir la pression statique souhaitée en sortie des canaux 128. Toutefois, ce raccordement peut d'une manière plus générale être localisé plus en amont ou plus en aval le long du canal d'injection 64, pourvu que la pression statique du flux d'air 134 en sortie des canaux 128 soit suffisante pour permettre une réduction du flux d'air 48 dans le premier joint à labyrinthe 78. En pratique, il est en général nécessaire pour cela que ce raccordement soit localisé en amont de l'extrémité aval des ailettes 65 qui s'étendent dans le canal d'injection 64.

L'étendue de la section transversale des canaux 128 est de préférence choisie en fonction du débit souhaité pour le flux d'air 134 en sortie de ces canaux.

Ces canaux 128 peuvent par ailleurs être inclinés tangentiellement de manière à réduire la vitesse relative du flux d'air 134 en sortie des canaux 128 par rapport à la partie tournante 84 du premier joint à labyrinthe 78, d'une manière analogue à l'effet produit par les ailettes 65 du canal d'injection 64.

Par ailleurs, les deux nervures 88a et 88b, qui délimitent la cavité dans laquelle débouchent les canaux 128, peuvent ne pas être deux nervures consécutives de la partie tournante 84 du premier joint à labyrinthe 78, et peuvent donc être séparées par des nervures 88 intermédiaires, notamment dans le cas où la section des canaux 128 est plus étendue que le pas axial entre deux nervures 88 consécutives de la partie tournante 84.

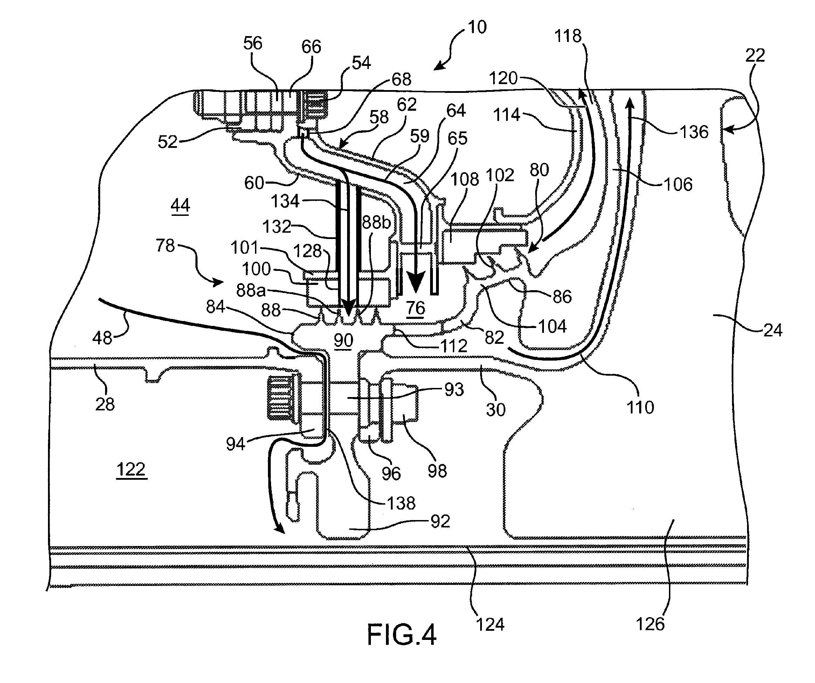

La figure 4 représente un deuxième mode de réalisation de l'invention qui diffère du premier mode de réalisation décrit ci-dessus par la présence de rainures 138 formées sur la face aval de la bride radiale 94, en regard du flanc amont du disque 92 du premier joint à labyrinthe 78, de manière à former des canaux correspondants de mise en communication de la première cavité annulaire 44 avec la quatrième cavité annulaire 122.

Dans le mode de réalisation représenté sur la figure 4, ces rainures 138 s'étendent radialement d'un bout à l'autre de la bride 94.

En fonctionnement, si la pression et le débit du flux d'air 134 en sortie des canaux 128 sont suffisants, le flux d'air 48 de refroidissement du rouet 18 est contraint de circuler dans les canaux formés par les rainures 138, entre la bride 94 et le disque 92. Les rainures 138 permettent ainsi de rendre le premier joint à labyrinthe 78 sensiblement étanche vis-à-vis du flux d'air 48.

Le flux d'air 48 rejoint alors dans la quatrième cavité le flux d'air 124 de ventilation du moyeu 126 du disque 24 de la turbine haute pression 16.

En variante, la ventilation du moyeu 126 de ce disque 24 peut être entièrement assurée par le flux d'air 48, auquel cas aucun prélèvement d'air 124 n'est requis en amont dans le compresseur haute pression 12.

Le mélange des flux 48 et 124 ou l'utilisation du flux 48 seul pour la ventilation du moyeu 126 du disque 24 peuvent présenter des avantages relatifs à la vitesse des variations thermiques de ces flux lors de variations du régime de fonctionnement de la turbomachine 10. Dans ces conditions en effet, il peut être avantageux de refroidir ou de réchauffer rapidement le moyeu du disque 24 pour réduire les dilatations différentielles entre ce disque et les éléments de stator qui l'entourent.

## Revendications

1. Turbomachine (10) à double corps, comprenant :
- un rotor haute pression comprenant un rouet (18) d'un compresseur haute pression (12) de la turbomachine et un disque aubagé (24) d'une turbine haute pression (16) de la turbomachine,
- une chambre de combustion (14) montée axialement entre le compresseur haute pression (12) et la turbine haute pression (16),
- deux parois coaxiales (60, 62) délimitant entre elles un canal annulaire d'injection d'air (64), qui est raccordé à un espace annulaire (38) de contournement de la chambre de combustion (14), et qui est destiné à accélérer un flux d'air (59) de refroidissement des aubes (26) du disque aubagé (24) de la turbine haute pression (16) provenant dudit espace de contournement (38) de la chambre de combustion,
- un premier joint à labyrinthe (78) comprenant une partie statique (100, 101) reliée fixement à une première (60) desdites parois délimitant le canal d'injection (64), et une partie tournante (84) portée par un disque (92) du rotor haute pression et comprenant au moins deux nervures annulaires (88) en saillie vers ladite partie statique (100, 101),
- un deuxième joint à labyrinthe (80) comprenant une partie statique (108) reliée fixement à une seconde (62) desdites parois délimitant le canal d'injection (64), et une partie tournante (86) reliée fixement à la partie tournante (84) du premier joint à labyrinthe (78),
- un flasque annulaire (106) monté en regard du flanc amont du disque aubagé (24) de la turbine haute pression (16) et délimitant avec ce flanc amont une partie amont (110) d'un circuit de refroidissement des aubes (26) de ce disque aubagé (24),
- une première cavité annulaire (44) délimitée par le flanc aval (46) du rouet (18), par un carter interne (36) de la chambre de combustion (14), par ladite première paroi (60) délimitant le canal d'injection (64), par ledit premier joint à labyrinthe (78), et par une paroi annulaire (28) s'étendant axialement de manière à relier ledit rouet (18) audit disque (92) du rotor haute pression qui porte la partie tournante (84) du premier joint à labyrinthe (78),
- une deuxième cavité annulaire (76) dans laquelle débouche ledit canal annulaire d'injection (64) et qui est délimitée par le premier joint à labyrinthe (78), par le deuxième joint à labyrinthe (80), et par une paroi annulaire (82) reliant les parties tournantes (84, 86) respectives de ces joints à labyrinthe et dans laquelle sont ménagés des orifices (112) de mise en communication de ladite deuxième cavité (76) avec ledit circuit de refroidissement (110) des aubes (26) du disque aubagé (24) de la turbine haute pression,
- une troisième cavité annulaire (118) qui communique avec une veine (27) d'écoulement d'un flux primaire de la turbomachine, et qui est délimitée au moins par le deuxième joint à labyrinthe (80) et par le flasque annulaire (106),
ladite turbomachine (10) étant **caractérisée en ce qu'**elle comprend une pluralité de canaux (128) ménagés dans ladite partie statique (100, 101) du premier joint à labyrinthe (78) et débouchant dans une cavité annulaire délimitée par deux (88a, 88b) des nervures (88) de la partie tournante (84) de ce premier joint à labyrinthe, de manière à y injecter de l'air (134) provenant du canal d'injection (64).

2. Turbomachine selon la revendication 1, **caractérisée en ce que** ledit canal annulaire d'injection (64) comprend des ailettes (65) inclinées de manière à permettre une réduction de la vitesse tangentielle relative du flux d'air (59) de refroidissement des aubes (26) par rapport au rotor haute pression (24, 26, 30).

3. Turbomachine selon la revendication 2, **caractérisée en ce que** chacun desdits canaux (128) est raccordé à une partie interne du canal d'injection (64) qui est située, relativement à l'écoulement dudit flux d'air (59) de refroidissement des aubes (26), en amont des extrémités aval respectives desdites ailettes (65).

4. Turbomachine selon la revendication 3, **caractérisée en ce que** chacune desdites parois de révolution coaxiales (60, 62) délimitant le canal annulaire d'injection (64) comprend, relativement à l'écoulement dudit flux d'air (59) de refroidissement des aubes (26), une partie amont sensiblement tronconique et une partie aval sensiblement radiale.

5. Turbomachine selon l'une quelconque des revendications 1 à 4, **caractérisée en ce qu'**elle comprend en outre des moyens (138) de mise en communication de la première cavité annulaire (44) avec une quatrième cavité annulaire (122) de la turbomachine (10), dans laquelle s'étend le moyeu (126) du disque aubagé (24) de la turbine haute pression (16).

6. Turbomachine selon la revendication 5, **caractérisée en ce que** lesdits moyens de mise en communication comprennent des canaux (138) formés entre une face amont dudit disque (92) du rotor haute pression qui porte la partie tournante (84) du premier joint à labyrinthe (78), et une face aval d'une bride annulaire (94) agencée à l'extrémité aval de ladite paroi (28) reliant le rouet (18) du compresseur haute pression (12) au disque (92) précité.

## Patentansprüche

1. Zweiwellen-Turbomaschine (10), umfassend:
- einen Hochdruckrotor, der ein Laufrad (18) eines Hochdruckverdichters (12) der Turbomaschine sowie eine beschaufelte Scheibe (24) einer Hochdruckturbine (16) der Turbomaschine umfasst,
- eine Brennkammer (14), die zwischen dem Hochdruckverdichter (12) und der Hochdruckturbine (16) axial angebracht ist,
- zwei koaxiale Wände (60, 62), die zwischen sich einen ringförmigen Lufteinleitungskanal (64) begrenzen, der an einen ringförmigen Raum (38) zur Umgehung der Brennkammer (14) angeschlossen ist und der dazu bestimmt ist, einen Luftstrom (59) zur Kühlung der Schaufeln (26) der beschaufelten Scheibe (24) der Hochdruckturbine (16), der aus dem Umgehungsraum (38) der Brennkammer stammt, zu beschleunigen,
- eine erste Labyrinthdichtung (78), die einen statischen Teil (100, 101), welcher mit einer ersten (60) der den Einleitungskanal (64) begrenzenden Wände fest verbunden ist, sowie einen umlaufenden Teil (84) umfasst, der durch eine Scheibe (92) des Hochdruckrotors getragen ist und wenigstens zwei in Richtung des statischen Teils (100, 101) vorspringende ringförmige Rippen (88) umfasst,
- eine zweite Labyrinthdichtung (80), die einen statischen Teil (108), welcher mit einer zweiten (62) der den Einleitungskanal (64) begrenzenden Wände fest verbunden ist, sowie einen umlaufenden Teil (86) umfasst, der mit dem umlaufenden Teil (84) der ersten Labyrinthdichtung (78) fest verbunden ist,
- einen ringförmigen Flansch (106), der gegenüber der stromaufwärtigen Flanke der beschaufelten Scheibe (24) der Hochdruckturbine (16) angebracht ist und mit dieser stromaufwärtigen Flanke einen stromaufwärtigen Teil (110) eines Kühlkreises der Schaufeln (26) dieser beschaufelten Scheibe (24) begrenzt,
- einen ersten ringförmigen Hohlraum (44), der durch die stromabwärtige Flanke (46) des Laufrades (18), durch ein Innengehäuse (36) der Brennkammer (14), durch die den Einleitungskanal (64) begrenzende erste Wand (60), durch die erste Labyrinthdichtung (78) und durch eine ringförmige Wand (28) begrenzt ist, die sich axial erstreckt, um das Laufrad (18) mit der Scheibe (92) des Hochdruckrotors, die den umlaufenden Teil (84) der ersten Labyrinthdichtung (78) trägt, zu verbinden,
- einen zweiten ringförmigen Hohlraum (76), in den der ringförmige Einleitungskanal (64) mündet und der durch die erste Labyrinthdichtung (78), durch die zweite Labyrinthdichtung (80) und durch eine ringförmige Wand (82) begrenzt ist, welche die jeweiligen umlaufenden Teile (84, 86) dieser Labyrinthdichtungen verbindet und in der Öffnungen (112) zum Verbinden des zweiten Hohlraums (76) mit dem Kühlkreis (110) der Schaufeln (26) der beschaufelten Scheibe (24) der Hochdruckturbine ausgebildet sind,
- einen dritten ringförmigen Hohlraum (118), der mit einem Strömungskanal (27) eines Primärstroms der Turbomaschine verbunden ist und der wenigstens durch die zweite Labyrinthdichtung (80) und durch den ringförmigen Flansch (106) begrenzt ist,
wobei die Turbomaschine (10) **dadurch gekennzeichnet ist, dass** sie eine Vielzahl von Kanälen (128) umfasst, die in dem statischen Teil (100, 101) der ersten Labyrinthdichtung (78) ausgebildet sind und in einen ringförmigen Hohlraum münden, der durch zwei (88a, 88b) der Rippen (88) des umlaufenden Teils (84) dieser ersten Labyrinthdichtung begrenzt ist, so dass aus dem Einleitungskanal (64) kommende Luft (134) hierin eingeleitet wird.

2. Turbomaschine nach Anspruch 1, **dadurch gekennzeichnet, dass** der ringförmige Einleitungskanal (64) geneigte Flügel (65) umfasst, um eine Verringerung der relativen Tangentialgeschwindigkeit des Luftstroms (59) zur Kühlung der Schaufeln (26) gegenüber dem Hochdruckrotor (24, 26, 30) zu ermöglichen.

3. Turbomaschine nach Anspruch 2, **dadurch gekennzeichnet, dass** ein jeder der Kanäle (128) an einen Innenteil des Einleitungskanals (64) angeschlossen ist, der relativ zur Strömung des Luftstroms (59) zur Kühlung der Schaufeln (26) stromaufwärts der jeweiligen stromabwärtigen Enden der Flügel (65) gelegen ist.

4. Turbomaschine nach Anspruch 3, **dadurch gekennzeichnet, dass** eine jede der koaxialen Rotationswände (60, 62), die den ringförmigen Einleitungskanal (64) begrenzen, relativ zu der Strömung des Luftstroms (59) zur Kühlung der Schaufeln (26) einen im Wesentlichen kegelstumpfförmigen stromaufwärtigen Teil und einen im Wesentlichen radialen stromabwärtigen Teil umfasst.

5. Turbomaschine nach einem der Ansprüche 1 bis 4, **dadurch gekennzeichnet, dass** sie ferner Mittel (138) zum Verbinden des ersten ringförmigen Hohlraums (44) mit einem vierten ringförmigen Hohlraum (122) der Turbomaschine (10), in dem sich die Nabe (126) der beschaufelten Scheibe (24) der Hochdruckturbine (16) erstreckt, umfasst.

6. Turbomaschine nach Anspruch 5, **dadurch gekennzeichnet, dass** die Verbindungsmittel Kanäle (138) umfassen, die zwischen einer stromaufwärtigen Seite der Scheibe (92) des Hochdruckrotors, welche den umlaufenden Teil (84) der ersten Labyrinthdichtung (78) trägt, und einer stromabwärtigen Seite eines ringförmigen Flansches (94), der an dem stromabwärtigen Ende der Wand (28), welche das Laufrad (18) des Hochdruckverdichters (12) mit der vorgenannten Scheibe (92) verbindet, ausgebildet sind.

## Claims

1. A twin-shaft turbine engine (10), comprising:
- a high-pressure rotor comprising an impeller (18) of a high-pressure compressor (12) of the turbine engine and a vaned disk (24) of a high-pressure turbine (16) of the turbine engine,
- a combustion chamber (14) mounted axially between the high-pressure compressor (12) and the high-pressure turbine (16),
- two coaxial walls (60, 62) delimiting an annular air injection channel (64) between them, which is connected to an annular bypass space (38) of the combustion chamber (14), and which is intended to accelerate a cooling air flow (59) for cooling the vanes (26) of the vaned disk (24) of the high-pressure turbine (16) coming from said bypass space (38) of the combustion chamber,
- a first labyrinth seal (78) comprising a static part (100, 101) securely connected to a first (60) of said walls delimiting the injection channel (64), and a rotary part (84) supported by a disk (92) of the high-pressure rotor and comprising at least two annular ribs (88) protruding toward said static part (100, 101),
- a second labyrinth seal (80) comprising a static part (108) securely connected to a second (62) of said walls delimiting the injection channel (64), and a rotary part (86) securely connected to the rotary part (84) of the first labyrinth seal (78),
- an annular flange (106) mounted opposite the upstream flank of the vaned disk (24) of the high-pressure turbine (16) and delimiting, with said upstream flank, a first upstream part (110) of a cooling circuit of the vanes (26) of said vaned disk (24),
- a first annular cavity (44) delimited by the downstream flank (46) of the impeller (18), an inner case (36) of the combustion chamber (14), said first wall (60) delimiting the injection channel (64), the first labyrinth seal (78), and an annular wall (28) extending axially so as to connect the impeller (18) to said disk (92) of the high-pressure rotor supporting the rotary part (84) of the first labyrinth seal (78),
- a second annular cavity (76) into which the injection channel (64) opens and which is delimited by the first labyrinth seal (78), the second labyrinth seal (80), and an annular wall (82) connecting the respective rotary parts (84, 86) of these labyrinth seals and in which openings (112) are formed for putting said second cavity (76) in communication with said cooling circuit (110) of the vanes (26) of the vaned disk (24) of the high-pressure turbine,
- a third annular cavity (118) that communicates with a channel (27) for the flow of a primary gas stream of the turbine engine, and which is delimited at least by the second labyrinth seal (80) and the annular flange (106),
said turbine engine (10) being **characterized in that** it comprises a plurality of channels (128) formed in said static part (100, 101) of the first labyrinth seal (78) and emerging into an annular cavity delimited by two (88a, 88b) of the ribs (88) of the rotary part (84) of the first labyrinth seal, so as to inject air (134) coming from the injection channel (64) therein.

2. The turbine engine according to claim 1, **characterized in that** said annular injection channel (64) comprises fins (65) tilted so as to make it possible to reduce the relative tangential speed of the cooling air flow (59) of the vanes (26) relative to the high-pressure rotor (24, 26, 30).

3. The turbine engine according to claim 2, **characterized in that** each of said channels (128) is connected to an inner portion of the injection channel (64) that is situated, relative to the flow of the cooling air flow (59) of the vanes (26), upstream of the respective downstream ends of said fins (65).

4. The turbine engine according to claim 3, **characterized in that** each of said coaxial revolution walls (60, 62) delimiting the annular injection channel (64) comprises, relative to the flow of said cooling air flow (59) of the vanes (26), a substantially tapered upstream portion and a substantially radial downstream portion.

5. The turbine engine according to any one of claims 1 to 4, **characterized in that** it also comprises means (138) for putting the first annular cavity (44) in communication with a fourth annular cavity (122) of the turbine engine (10), in which the hub (126) of the vaned disk (24) of the high-pressure turbine (16) extends.

6. The turbine engine according to claim 5, **characterized in that** communication means comprise channels (138) formed between an upstream surface of the disk (92) of the high-pressure rotor that supports the rotary part (84) of the first labyrinth seal (78), and a downstream surface of an annular flange (94) arranged at the downstream end of said wall (28) connecting the impeller (18) of the high-pressure compressor (12) to the aforementioned disk (92).
